# DEMANDE DE BREVET EUROPEEN

(11) **EP 4 394 801 A1**
(43) Date de publication de la demande: **03.07.2024**
(21) Numéro de dépôt: 23220051.9
(22) Date de dépôt: 22.12.2023
(51) Int. Cl.: H01B 3/28, H01B 3/44, H01B 9/00, C08L 23/12

(54) **CÂBLE COMPRENANT UNE COUCHE POLYMÈRE RECYCLABLE**

(30) Priorité: 30.12.2022 FR 2214692
(71) Demandeur: Nexans, 92400 Courbevoie (FR)
(72) Inventeur: LARCHE, Jean-François, 69250 FLEURIEU-SUR-SAÔNE (FR); SLAWINSKI, Lucile, 69360 TERNAY (FR); MULOT, Benjamin, 69100 Villeurbanne (FR)
(74) Mandataire: Ipsilon

(57) **Abrégé**

L'invention concerne un câble électrique comprenant, autour d'au moins un élément conducteur allongé, une couche thermoplastique recyclable comprenant au moins :
- un matériau composite (TPV) comprenant :
une matrice polymère thermoplastique (a) ; et
une phase élastomère vulcanisée (b) dispersée au sein de ladite matrice thermoplastique (a);
et
- un polyéthylène.

## Description

La présente invention concerne le domaine des dispositifs électriques de type câbles électrique ou accessoires pour câbles électriques et qui comprennent au moins une couche polymère recyclable. Par « couche polymère », on entend ici un revêtement à base d'au moins un polymère.

L'invention s'applique typiquement, mais non exclusivement, aux domaines des câbles d'énergie à basse tension (notamment inférieure à 6kV) ou à moyenne tension (notamment de 6 à 45-60 kV), qu'ils soient à courant continu ou alternatif.

Les câbles d'énergie comprennent typiquement un conducteur électrique central, généralement au moins un élément conducteur électrique allongé de type fil, ou toron de fils, et au moins une couche électriquement isolante entourant cet élément conducteur central. Optionellement, un câble d'énergie peut comprendre en outre au moins une couche semi-conductrice, qui peut par exemple être, selon les applications envisagées :
- éventuellement un couche semi-conductrice interne, localisée entre la couche électriquement isolante et l'élément conducteur central (le cas échéant, la couche semi conductrice interne entoure l'élément conducteur central et la couche électriquement isolante est localisé autour de la couche semi conductrice interne) ; et/ou
- éventuellement une couche semi conductrice externe entourant ladite couche électriquement isolante.

Classiquement, ces couches sont réalisées à partir de polymères réticulés, notamment à base d'une polyoléfine réticulée telle qu'un polyéthylène réticulé (XLPE) ou à base d'un élastomère réticulé par exemple un éthylène-propylène-diène réticulé (EPDM). L'emploi de polymères réticulés est bien connue comme améliorant certaines propriétés des couches, notamment leurs propriétés mécaniques et thermiques. Cependant, la réticulation des polymères présente notamment un problème, à savoir qu'elle rend très difficile (et souvent même impossible en pratique) un recyclage des couches polymères.

Plus récemment, Il a été proposé, entre autres dans la demande de brevet WO2018167442, d'employer des couches à base de polypropylène, qui présentent l'avantage de ne pas avoir à être réticulées et qui ouvrent ainsi la possibilité d'un recyclage plus aisé. Les couches à base de polypropylène présentent en général de bonnes propriétés diélectriques, mais des propriétés mécaniques et thermiques moins intéressantes que celles des couches réticulées. En particulier, la faible densité du polypropylène est associée à des propriétés de conductivité thermiques inférieures à celles du polyéthylène, ce qui constitue en particulier un inconvénient pour des câbles d'énergie de type moyenne ou haute tension : cette conductivité thermique plus faible diminue en effet l'évacuation de la chaleur générée par effet Joule, ce qui impacte négativement la quantité d'énergie transportable par le câble.

Un but de la présente invention est de fournir des câbles comprenant une ou plusieurs couches isolantes ou semi-conductrices recyclables, et qui présentent de bonnes propriétés à la fois diélectriques, mécaniques, et thermiques.

A cet effet, la présente invention propose d'employer au sein de ces couches un mélange d'un matériau composite dit TPV (pour l'anglais *« thermoplastic vulcanizate »*) et d'un polyéthylène.

Plus précisément, selon un premier aspect, la présente invention a pour objet un câble électrique comprenant, autour d'au moins un élément conducteur allongé, une couche thermoplastique recyclable comprenant au moins
- un matériau composite (désigné également ci-après par « TPV » à des fins de concision) comprenant :
   (a) une matrice polymère thermoplastique ; et
   (b) une phase élastomère vulcanisée dispersée au sein de ladite matrice thermoplastique (a) ; et
- un polyéthylène.

Selon un mode préférentiel, la phase élastomère vulcanisée dispersée (b) comprend un élastomère réticulé d'éthylène-propylène-diène (EPDM). Avantageusement, la phase élastomère vulcanisée dispersée (b) est uniquement constituée d'un élastomère EPDM vulcanisé.

Alternativement, d'autres élastomères réticulés peuvent être présents dans la phase élastomère vulcanisée (b), seuls ou en mélange avec de l'EPDM, par exemple un élastomère réticulé d'éthylène-propylène.

Par ailleurs, il est avantageux que la matrice thermoplastique (a) comprenne une polyoléfine. Par « polyoléfine » on entend ici un copolymère ou homopolymère d'oléfine, de préférence d'oléfine non cyclique comme l'éthylène ou le propylène. Avantageusement, la matrice thermoplastique (a) comprend un homopolymère ou un copolymère de propylène, par exemple un homopolymère de polypropylène Selon un mode préférentiel, la matrice (a) est uniquement constituée d'un homopolymère de polypropylène.

Ainsi, selon un mode intéressant, le matériau composite TPV comprend une matrice (a) à base de polypropylène, dans laquelle est dispersée un phase (b) à base d'un EPDM réticulé. Il peut par exemple s'agir d'une matrice (a) constituée uniquement de polypropylène dans laquelle est dispersée une phase dispersée (b) qui consiste uniquement en de l'EPDM réticulé.

Selon une variante intéressante de l'invention, la couche thermoplastique recyclable comprenant le TPV et le polyéthylène peut comprendre en outre un copolymère de propylène (c), qui est de préférence un copolymère de propylène et d'une alpha oléfine distincte du propylène.

Par ailleurs, qu'un copolymère additionnel de propylène soit présent ou non, la couche thermoplastique recyclable comprenant le TPV et le polyéthylène peut avantageusement comprendre un liquide diélectrique, comme par exemple une huile diélectrique.

Avantageusement, la couche thermoplastique recyclable de l'invention comprend un composé polaire tel que de la benzophénone, ce qui optimise encore ses propriétés diélectriques. Le cas échéant, le composé polaire de type benzophénone est avantageusement présent dans la couche à hauteur de 0,1 à 0,5 % en masse (par exemple entre 0,2 et 0,4%, notamment de l'ordre de 0,3% en masse) par rapport à la masse totale de la couche thermoplastique recyclable. Typiquement, un composé polaire de type benzophénone est employée en mélange avec un liquide diélectrique, notamment une huile diélectrique. Le composé polaire (par exemple la benzophénone) est alors avantageusement prémélangée audit liquide diélectrique avant son incorporation dans la composition polymère formant la couche thermoplastique, ce prémélange formant un liquide diélectrique additivé particulièrement adapté à la mise en oeuvre de l'invention.

Un câble selon l'invention est de préférence un câble d'énergie dit de type basse tension (à savoir destiné à véhiculer un courant de tension inférieure à 6kV) ou un câble d'énergie dit de type moyenne tension (qui est destiné à véhiculer un courant de tension entre 6 et 60 kV).

Dans le cas d'un câble d'énergie basse tension, la couche thermoplastique recyclable est typiquement une couche d'isolation, de préférence interne audit câble.

Dans le cas d'un câble d'énergie moyenne tension, le câble peut comprendre une ou plusieurs couches thermoplastiques recyclables selon l'invention, chacune desdits couches étant soit une couche d'isolation, soit une couche semi-conductrice. En d'autres termes, dans le cas d'un câble d'énergie moyenne tension, la couche thermoplastique recyclable selon l'invention est une couche d'isolation ou une couche semi-conductrice.

Différents aspects et modes de réalisation particuliers de l'invention sont décrits plus en détails ci-après.

### LE MATERIAU COMPOSITE (TPV)

De préférence, le matériau TPV est présent dans la couche thermoplastique recyclable selon l'invention à hauteur de 5 à 20% en masse par rapport à la masse totale de la masse de ladite couche.

### LE POLYETHYLENE

Le polyéthylène présent dans la couche thermoplastique recyclable selon l'invention peut notamment être un polyéthylène basse densité, et de préférence un polyéthylène linéaire basse densité, notamment selon la norme ISO 1183A (à une température de 23°C). Dans la présente invention, l'expression « polyéthylène linéaire basse densité » signifie un polyéthylène linéaire ayant une densité allant de 0,91 à 0,925 environ, ladite densité étant mesurée selon la norme ISO 1183A (à une température de 23°C).

Quelle que soit sa nature, le polyéthylène est de préférence présent dans la couche thermoplastique recyclable selon l'invention à hauteur de 15 à 30% en masse par rapport à la masse totale de la masse de ladite couche.

Le rapport massique polyéthylène/TPV, calculé par le rapport de la masse totale de polyéthylène dans la couche, rapportée à la masse totale de TPV dans la couche est de préférence compris entre 2 et 4, et typiquement de l'ordre de 2,5 à 3,5, par exemple 3.

### LE COPOLYMERE DE PROPYLENE (c)

Le copolymère de propylène (c) est un composé optionnel qui est avantageusement présent dans la couche thermoplastique dont il améliore encore les performances. Ce composé (c) est de préférence un copolymère de propylène et d'une alpha oléfine distincte du propylène.

Cette alpha oléfine distincte du propylène est de préférence un composé de formule CH₂=CH-R, où R est un groupe alkyle linéaire ou ramifié comportant de 2 à 12 atomes de carbone, et elle peut notamment être choisie parmi les alphaoléfines suivantes : éthylène, 1-butène, 1-pentène ; 4-méthyl-1-pentène, 1-hexène, 1-octène, 1-décène, 1-dodécène, et un de leurs mélanges.

Quelle que soit sa nature exacte, l'alpha-oléfine différente du propylène (éthylène ou autre) présente dans le copolymère (c) représente de préférence moins de 15% en mole, par exemple entre 1 et 10% en mole, par rapport au nombre de moles total d'unités monomères dans le copolymère de propylène et d'oléfine.

### LE LIQUIDE DIELECTRIQUE ET LES COMPOSES POLAIRES DE TYPE BENZOPHENONE

Lorsqu'un liquide diélectrique est présent dans la couche thermoplastique de l'invention, celui-ci peut être avantageusement choisi parmi les huiles minérales (par exemple les huiles naphténiques, huiles paraffiniques ou huiles aromatiques), les huiles végétales (notamment les huiles de soja, de lin, de colza, de maïs, et/ou l'huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.

Selon un mode de réalisation particulier, le liquide diélectrique est présent à hauteur de 0% à 20% en masse environ, de préférence de 1 à 10% en masse environ, et de préférence encore de 3 à 7% en masse environ, par rapport à la masse totale de la couche matériau polymère thermoplastique.

Le liquide diélectrique peut avantageusement comprendre une huile minérale. Une huile minérale utile à titre de liquide diélectrique selon l'invention est généralement liquide au moins sur la plage de température entre 20 et 25°C et avantageusement au moins sur la plage de température entre 15°C et 30°C.

A titre d'exemples d'huile minérale utile à titre de liquide diélectrique selon l'invention on peut notamment citer les huiles naphténiques, les huiles paraffiniques et les huiles minérales obtenues à partir du raffinage d'un brut pétrolier.

Selon une forme de réalisation particulièrement préférée de l'invention, l'huile minérale comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

Par ailleurs, la couche thermoplastique de l'invention comprend avantageusement au moins un composé polaire de type benzophénone ou acétophénone ou un de leur dérivé. Le composé polaire peut alors notamment être choisi parmi : la benzophénone, l'acétophénone, la dibenzosubérone, la fluorénone et l'anthrone. La benzophénone est particulièrement préférée.

Avantageusement, le liquide diélectrique compris dans la couche polymère de l'invention comprend un mélange d'une huile minérale, de préférence du type précité. Selon ce mode de réalisation, le liquide diélectrique peut avantageusement comprendre au moins 70% en masse environ d'huile minérale, et de préférence au moins 80% en masse environ d'huile minérale, par rapport à la masse totale du liquide diélectrique. La proportion de composé polaire (de type benzophénone ou acétophénone ou dérivé de ceux-ci) représente de préférence au moins 2,5% en masse environ, de préférence au moins 3,5% en masse environ, et encore plus préférentiellement au moins 4% en masse environ, par rapport à la masse totale du liquide diélectrique.

### AUTRES ADDITIFS OPTIONNELS

La couche polymère de l'invention peut comprendre avantageusement un ou plusieurs additifs autres que les composés précités, par exemple des antioxydants, des agents anti-UV, des agents anti-cuivre, des agents antiarborescences d'eau, des pigments, et un de leurs mélanges.

### LES CABLES D'ENERGIE COMPRENANT UNE COUCHE THERMOPLASTIQUE RECYCLABLE SELON L'INVENTION

Un câble mettant en oeuvre une couche thermoplastique recyclable selon l'invention peut notamment être :
- un câble électrique comprenant au moins un élément électriquement conducteur allongé, entouré par ladite couche thermoplastique recyclable, cette couche pouvant par exemple être :
- une couche isolante (de préférence interne au câble, ou alternativement une gaine extérieure) ; ou
- une couche semi-conductrice

### COUCHE EMPLOYEE A TITRE DE COUCHE ISOLANTE

Lorsque la couche thermoplastique recyclable de l'invention est une couche électriquement isolante, elle présente de préférence une conductivité électrique d'au plus 1.10-9 S/m (siemens par mètre) à 25°C.

### COUCHE EMPLOYEE A TITRE DE COUCHE SEMI-CONDUCTRICE

Lorsque la couche thermoplastique recyclable de l'invention est une couche semi-conductrice, elle comprend en général une charge électriquement conductrice, en une quantité suffisante pour rendre la composition polymère semi-conductrice. On peut citer le noir de carbone comme exemple de charge électriquement conductrice bien adaptée.

On entend ici par « couche semi-conductrice » une couche dont la conductivité électrique est d'au moins 1.10⁻⁹ S/m (siemens par mètre), de préférence d'au moins 1.10⁻³ S/m, et en général inférieure à 1.10³ S/m (à 25°C).

### STRUCTURES POSSIBLES POUR UN CABLE SELON L'INVENTION

Selon un premier mode de réalisation possible, la couche thermoplastique recyclable de l'invention peut être employée dans un câble électrique à titre de couche isolante directement en contact physique avec un élément électriquement conducteur allongé. Ce mode de réalisation est notamment bien adapté pour un câble de type basse tension.

Selon un autre mode de réalisation possible, le dispositif électrique de l'invention est un câble électrique qui comprend une première couche semi-conductrice entourant un élément électriquement conducteur allongé, une couche électriquement isolante entourant ladite première couche semi-conductrice, et une deuxième couche semi-conductrice entourant ladite couche électriquement isolante, et où la couche thermoplastique recyclable de l'invention est au moins l'une de ces trois couches, de préférence au moins deux desdites trois couches, et de préférence lesdites trois couches. On parle dans ce cas de câble moyenne ou haute tension.

Selon la présente invention, l'élément électriquement conducteur allongé du câble électrique peut être un fil métallique ou une pluralité de fils métalliques, torsadé(s) ou non, notamment en cuivre ou en aluminium, ou un de leurs alliages.

### MISE EN PLACE D'UNE COUCHE THERMOPLASTIQUE SELON L'INVENTION

La couche thermoplastique recyclable de l'invention peut être une couche extrudée ou une couche moulée, qui peut notamment être obtenue par des procédés d'extrusion ou de moulage bien connus de l'homme du métier. La couche thermoplastique recyclable de l'invention est de préférence une couche extrudée. Lorsque le dispositif électrique est un accessoire pour câble électrique, la couche réticulée est de préférence une couche moulée.

L'invention sera encore davantage illustrée par la Figure en Annexe et l'exemple illustratif ci-après.

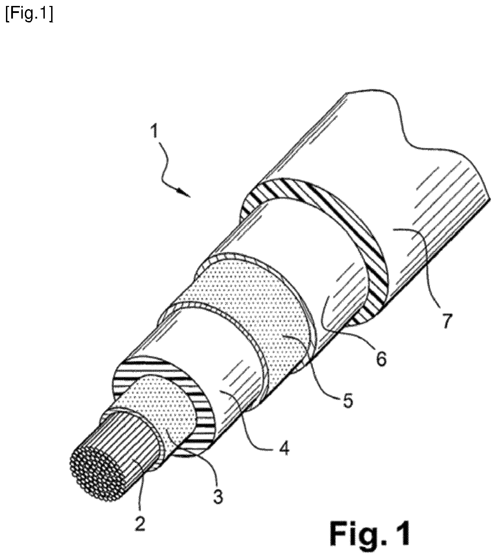

[FIG. 1] La **Figure 1** représente une vue schématique d'un câble électrique comportant une couche thermoplastique isolante selon l'invention.

Pour des raisons de clarté, seuls les éléments essentiels pour la compréhension de l'invention ont été représentés de manière schématique, et ceci sans respect de l'échelle.

Sur la Figure 1 est représenté un câble électrique 1 qui comprend un élément électriquement conducteur 2 allongé central, notamment en cuivre ou en aluminium. Ce câble électrique 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche thermoplastique recyclée selon l'invention, obtenue par extrusion et comprenant un matériau composite TPV ; un polyéthylène ; avantageusement un copolymère ^{©} de propylène ; et optionnellement des additifs, du type précité.

Les couches semi-conductrices 3 et 5 sont avantageusement des couches extrudées thermoplastiques recyclée selon l'invention comprenant un matériau composite TPV ; un polyéthylène ; avantageusement un copolymère ^{©} de propylène, optionnellement des additifs du type précité ; et une charge électriquement conductrice (typiquement un noir de carbone).

La présence de l'écran métallique 6 et de la gaine extérieure de protection 7 est préférentielle, mais non essentielle, cette structure de câble étant une structure de type usuelle.

### Exemple

Les compositions suivantes ont été testées qui comprennent un matériau composite de type TPV (produit commercial de la gamme des Santoprene et OptiPren à base d'une phase élastomère EPDM dispersée dans une matrice polypropylène) ; un polyéthylène (LLDPE BPD 3642), un copolymère de propylène et d'éthylène (Moplen RP210G), une huile minérale (BNS28), de la benzophénone (préalablement mélangée à l'huile) et un additif antioxydant (Irganox B225).

A titre comparatif, des compositions témoins exemptes de polyéthylène et de copolymère ont été testées où ces composés ont été remplacées par du TPV. Pour la plupart, ces compositions n'ont pas conduit à des compositions utilisables car l'absence de polyéthylène a rendu l'incorporation de l'huile impossible. Seule le témoin à base d'Optipren a conduit à une composition polymère homogène.

Les compositions des formules testées sont reportées dans le tableau 1 cidessus (les quantités sont en parties en poids pour 100 parties en poids de la composition total)

**Tableau 1 : Composition des compositions testées**

| **Composition** | **C1** | **C2** | **C3** | **Témoin** |
|---|---|---|---|---|
| **Moplen** | 56,6 | | | 0 |
| **LLPDE** | 28 | | | |
| **TPV :** | | | | |
| **Santoprene 203-40** | 9,4 | | | |
| **Santoprene 203-50** | | 9,4 | | |
| **OptiPren** | | | 9,4 | 94 |
| **Huile** | 5,4 | | | |
| **Benzophénone** | 0,3 | | | |
| **Antioxydant** | 0.3 | | | |

Les performances des compositions ainsi préparées sont reportées dans le tableau 2 ci-dessous

**Tableau 2 : performances des compositions testées**

| **Composition** | **C1** | **C2** | **C3** | **Témoin** |
|---|---|---|---|---|
| **Coloration** | **translucide** | **translucide** | **translucide** | **blanc opaque** |

| **DSC ^{[1]}** | | | | |
|---|---|---|---|---|
| **Température de fusion (2° cycle)** | 124/147 | 123/146 | 123/144°C | 155°C |
| **Température de début de fusion (2⁸ cycle)** | 118/137 | 119/137 | 119/135°C | 142°C |

| **Propriétés mécaniques ⁽²⁾** | | | | |
|---|---|---|---|---|
| **TSP (MPa)** | 31.2 | 286 | 31,2 | 16,2 |
| **EB(%)** | 909 | 909 | 916 | 750 |

| **Mesures après Vieillissement thermique (après 10 jours à 1.35°c)** | | | | |
|---|---|---|---|---|
| **ΔTSP** | -19% | -12% | -18% | +6% |
| **ΔEB** | -27 | -23 | -23% | +23% |

| **Mesure de thermo pression ⁽³⁾** | | | | |
|---|---|---|---|---|
| **Valeur d'indentation (%)** | 3 | 2 | 3 | 23 |

| **Elongation à froid ⁽⁴⁾** | | | | |
|---|---|---|---|---|
| **Elongation (%)** | 687 | 503 | 694 | >800 |

| **Prise en eau ⁽⁵⁾** | | | | |
|---|---|---|---|---|
| **Gain de masse (mg/cm²)** | | | 0,17 | 0,14 |

| **Spectroscopie diélectrique ⁽⁶⁾** | | | | |
|---|---|---|---|---|
| tan (δ) 110°C | 4,18.10⁻⁴ | 2,4.10⁻⁴ | 1,22.10⁻³ | 2,4.10⁻² |
| 90°C | | | 1,83.10⁻⁴ | 1,1.10⁻² |
| 70°C | | | 3,42.10⁻⁴ | 2,9.10⁻³ |
| 30°C | 4,97.10⁻⁴ | 8,2.10⁻⁵ | | 2,9.10⁻⁴ |
| **Permittivité 110°C** | | | 2,13 | 1,94 |
| **90°C** | 2,22 | 2,22 | 2,20 | 2,00 |
| **70°C** | | | 2,25 | 2,05 |
| **30°C** | 2,33 | 2,33 | 2,31 | 2,13 |

| | | | | |
|---|---|---|---|---|
| Notes : (1) : mesure de DSC sous flux azote, 3 cycles de montée en température de -20°C à +250°C avec une vitesse de 10°C/min ⁽²⁾ : mesurées sur INSTRON à -250 mm/min - médiane sur 5 ⁽³⁾ : la valeur d'indentation est exprimée en pourcentage ⁽⁴⁾ : mesure à -25°C ⁽⁵⁾ : mesure effectuée après traitement de 336h à 85°C ⁽⁶⁾ : norme Max tan (δ) 30°C = 4.10⁻³ Max tan (δ) 90°C = 8.10⁻³ | | | | |

## Revendications

1. Câble électrique comprenant, autour d'au moins un élément conducteur allongé, une couche thermoplastique recyclable comprenant au moins :
- un matériau composite (TPV) comprenant :
(a) une matrice polymère thermoplastique ; et
(b) une phase élastomère vulcanisée, dispersée au sein de ladite matrice thermoplastique (a);
et
- un polyéthylène.

2. Câble électrique selon la revendication 1, où la phase élastomère vulcanisée dispersée (b) comprend un élastomère réticulé d'éthylène-propylène-diène (EPDM).

3. Câble électrique selon la revendication 1 ou 2, où la matrice thermoplastique (a) comprend un homopolymère ou un copolymère de propylène.

4. Câble électrique selon l'une des revendication 1 à 3, où la couche thermoplastique recyclable comprend en outre un copolymère de propylène et d'une alpha-oléfine autre que le propylène, de préférence un copolymère de propylène et d'éthylène.

5. Câble électrique l'une des revendication 1 à 4, où la couche thermoplastique recyclable comprend en outre un liquide diélectrique.

6. Câble électrique selon l'une des revendications 1 à 5, où la couche thermoplastique recyclable comprend en outre de la benzophénone.

7. Câble électrique selon l'une des revendications 1 à 6, où le câble est un câble d'énergie de type basse tension.

8. Câble électrique selon la revendication 7, où la couche thermoplastique recyclable est une couche isolante.

9. Câble électrique selon l'une des revendications 1 à 6, où le câble est un câble d'énergie de type moyenne tension

10. Câble électrique selon la revendications 9, où la couche thermoplastique recyclable est une couche isolante ou une couche semi-conductrice.
